# EUROPÄISCHE PATENTSCHRIFT

(11) **EP 2 984 725 B1**
(45) Veröffentlichungstag und Bekanntmachung des Hinweises auf die Patenterteilung: **08.05.2019**
(21) Anmeldenummer: 14709702.6
(22) Anmeldetag: 13.03.2014
(51) Int. Cl.: H02J 3/12, H02J 3/38

(54) **WINDENERGIEANLAGE MIT ERWEITERTEM SPANNUNGSBEREICH**
WIND TURBINE HAVING EXTENDED VOLTAGE RANGE
ÉOLIENNE À PLAGE DE TENSION ÉTENDUE

(30) Priorität: 09.04.2013 DE 102013206241
(43) Veröffentlichungstag der Anmeldung: 17.02.2016
(73) Patentinhaber: Senvion GmbH, 22297 Hamburg (DE)
(72) Erfinder: LETAS, Heinz-Hermann, 24796 Bovenau (DE)
(74) Vertreter: Glawe, Delfs, Moll
(86) Internationale Anmeldenummer: PCT/EP2014/055009
(87) Internationale Veröffentlichungsnummer: WO 2014/166694

(56) Entgegenhaltungen:
- EP-A1- 2 573 895
- WO-A2-2007/006565
- CH-A- 176 137
- DE-A1- 4 429 884
- DE-A1-102010 015 276
- DE-B- 1 282 171

## Beschreibung

Die Erfindung betrifft eine Windenergieanlage mit einem Windrotor, einem damit angetriebenen Generator zur Erzeugung elektrischer Energie und eine Anschlussleitung zur Abgabe der elektrischen Energie.

Windparks werden im Zuge fortschreitender Ausbreitung und gleichzeitig steigender Leistungsfähigkeit bevorzugt an solchen Orten errichtet, an denen gute Windbedingungen herrschen, insbesondere an Küsten, auf See oder in bergigen Regionen. In vielen Fällen handelt es sich hierbei um Gebiete mit nur unzureichend vorhandener Infrastruktur, das gilt besonders für Windparks auf See (sogenannte Offshore-Windparks), bei denen in der Regel noch überhaupt keine Infrastruktur vorhanden ist. Dies bedingt verhältnismäßig lange Leitungswege zu Verbrauchern bzw. bis zum Erreichen leistungsfähiger Verteilungsnetzwerke. Daher kommt es bei Windparks mit größeren Leistungseinspeisungen häufig zu Spannungsabweichungen. Die Netzbetreiber haben darauf reagiert und verlangen von den Windenergieanlagen in zunehmendem Maße eine größere Spannungsfestigkeit gegenüber Abweichungen von der Nennspannung, wobei diese Spannungsfestigkeit auch im Fall eines Betriebs mit von cos phi = 1 abweichendem Leistungsfaktor gegeben sein soll.

Um den Spannungsbereich der Windenergieanlagen zu erhöhen, ist es bekannt, diese mit einem Stufentransformator zu versehen. Hierbei kann mittels eines Schalters das Übersetzungsverhältnis des Transformators geändert werden, so dass sich die Windenergieanlage auf diese Weise an unterschiedliche Spannungen im vorgelagerten Netz anpassen kann. Damit kann zwar ein verhältnismäßig großer Spannungsbereich überdeckt werden, jedoch sind die Schaltzeiten dieser Stufenschalter verhältnismäßig lang (bis in den Minutenbereich), was als zu träge angesehen wird. Außerdem sind die Stufenschalter verschleißanfällig. Um diese Problematik zu vermeiden, kann zwar grundsätzlich eine Lösung basierend auf Halbleiterelementen vorgesehen sein. Dies hat jedoch den Nachteil, dass die Halbleiterelemente ausgesprochen groß dimensioniert sein müssen und damit aufwendig sind, da über sie die volle Leistung übertragen wird. Für moderne leistungsstarke Windenergieanlagen im Megawattbereich ist dies praktisch kaum sinnvoll möglich.

Aus der WO 2007/006565 A2 ist eine Windenergieanlage bekannt, die dazu ausgebildet ist bei Überspannung im Netz vorhandene Stromreserven zur Leistungssteigerung zu nutzen. Zur Erhöhung des Spannungsbereichs ist nichts offenbart. Klassische Einrichtungen zur Spannungsänderung mit Zusatztransformatoren sind Gegenstand der CH 176 137 A. Die Zusatztransformatoren sind einphasig. Dabei sind die Zusatztransformatoren jedoch aus der Phase selbst gespeist. Eine zusätzliche Spannungsquelle ist nicht offenbart. Damit sinkt bei Unterspannung auch die vom Zusatztransformator bereitgestellte Spannung, was für eine Stabilisierung kontraproduktiv ist.

Ein einem ganz anderen Zusammenhang, nämlich für die Verbraucherseite sind diverse Maßnahmen zur Spannungsstabilisierung bekannt. Hierbei kann ein geschalteter Zusatztransformator vorgesehen sein (DE 44 29 884 A1), allerdings müssen die Schalter hierbei die volle Leistung übernehmen - das Prinzip ist nur bei eher leistungsschwachen Verbrauchern tauglich. Entsprechendes gilt auch für Zusatztransformatoren in einem Verteiltransformator des lokalen 230V-Ortsnetzes (DE 10 2010 015 276 A1), die je Bedarf zu- und abgeschaltet werden, wobei auch hier (verbrauchtypisch) die Schalteinheiten die volle Leistung führen müssen.

Ferner ist bekannt, einen Verknüpfungspunkt eines Windpark mit mehreren Windenergieanlagen über eine gemeinsame Kopplungsleitung mit einem Übertragungsnetz zu verbinden, wobei in diese gemeinsame Kopplungsleitung ein Zusatztransformator mit seiner Sekundärwicklung eingeschleift ist (EP 2 573 895 A1). An eine Primärwicklung des Zusatztransformators ist über ein Schaltwerk ein Umrichter angeschlossen, der von einer Batterie gespeist ist. Der Umrichter und die Batterie bilden gemeinsam ein Energiespeicherelement, das dazu ausgebildet, überschüssige elektrische Leistung aufzunehmen und umgekehrt (insbesondere im Fall von mangelndem Wind) fehlende elektrische Leistung aus der Batterie zu ergänzen. Gespeist wird hierbei auf den Verknüpfungspunkt des Windparks zur Stabilisierung. Eine Erweiterung des Spannungsbereichs der Windenergieanlage ist nicht offenbart.

Basierend auf dem zuletzt genannten Stand der Technik liegt der Erfindung die Aufgabe zu Grunde, eine Windenergieanlage hinsichtlich ihres Spannungsbereichs zu erweitern, wobei mit wenig Aufwand schnellere Schaltzeiten erreicht werden sollen.

Die erfindungsgemäße Lösung liegt in den Merkmalen der unabhängigen Ansprüche. Vorteilhafte Weiterbildungen sind Gegenstand der abhängigen Ansprüche.

Die Erfindung beruht auf dem Gedanken, mittels eines aus einem zusätzlichen Kleintransformator mit einem Schaltwerk bestehenden Spannungsexpanders eine Erweiterung des Spannungsbereichs herbeizuführen, in dem die Windenergieanlage betrieben werden kann. Mittels des Schaltwerks wird der Kleintransformator hierbei mehrstufig zugeschaltet, wobei abhängig von der Schaltung der Stufen eine mehr oder weniger große bzw. richtungsmäßig verschiedene Spannungsverschiebung erzielt wird. Der Kleintransformator weist einen Bruchteil der Nennleistung der Windenergieanlage auf. Da der Kleintransformator erfindungsgemäß in die Anschlussleitung zwischen Windenergieanlage und Netz eingeschleift ist, kann er auf diese Weise die Spannung der Windenergieanlage erhöhen, indem er vorzeichengleich zur von der Windenergieanlage abgegebenen Spannung eine zusätzliche Spannung induziert, oder erniedrigen, indem er vorzeichenverkehrt zur Windenergieanlage eine Spannung induziert.

Ein besonderer Clou der Erfindung liegt darin, dass dank seiner Anordnung längs in der Anschlussleitung ein Transformator genügt, dessen Leistung deutlich kleiner bemessen sein kann als die Leistung der Windenergieanlage. Der Transformator wird daher als "Kleintransformator" bezeichnet. Die Bemessungsgröße dieses Kleintransformators ist allein abhängig von dem gewünschten Spannungshub des Spannungsexpanders. Genügt bspw. eine Expansion um 10 % bezogen auf den Nennwert, so braucht der Kleintransformator auch nur eine Leistung in Höhe von etwa 10 % der Nennleistung der Windenergieanlage aufzuweisen. Mit der erfindungsgemäßen Anordnung ergibt sich damit nicht nur eine mehrstufige und damit angepasste Erweiterung des Spannungsbereichs der Windenergieanlage, sondern dies gelingt auch auf frappierend genügsame Weise, nämlich mit einem Spannungsexpander, dessen Kleintransformator nur einen Bruchteil der Nennleistung der Windenergieanlage aufzuweisen braucht. Damit kann mit sehr geringem Zusatzaufwand eine beträchtliche Erweiterung des Spannungsbereichs der Windenergieanlage erreicht werden.

Nachfolgend seien einige verwendete Begriffe erläutert:
Unter Kleintransformator wird ein zusätzlicher, eigenversorgter Transformator verstanden, der in die Anschlussleitung zwischen der Windenergieanlage bzw. deren Anlagentransformator einerseits und einem Netzanschlusspunkt in der Windenergieanlage andererseits eingeschleift ist.

Bei dem Netzanschlusspunkt kann es sich um einen Anschlusspunkt der Windenergieanlage an ein parkinternes Netz handeln oder um einen Übergabepunkt an ein übergeordnetes Energieübertragungsnetz.

Unter mehrstufig wird sowohl eine uni- wie auch eine bipolare Stufung verstanden. Das bedeutet, dass unter mehrstufig sowohl eine Stufung im Sinne von 1, 2, 3, ... fallen kann, wie auch eine Stufung im Sinne von -1,0, +1.

Besonders bevorzugt ist es, wenn die mehrstufige Ansteuerung der Primärwicklung des Kleintransformators mit unterschiedlicher Polarisation erfolgt. Dies schafft die Möglichkeit, nicht nur den Spannungsbereich der Windenergieanlage mittels des Spannungsexpanders nach oben zu größeren Spannungen, sondern auch nach unten zu kleineren Spannungen zu erweitern. Zweckmäßigerweise ist auch eine Null-Stufe vorgesehen.

Um einen größeren Verstellbereich für den Spannungsexpander zu erreichen, sind vorzugsweise mehrere Kleintransformatoren in Reihe in der Anschlussleitung angeordnet. Damit kann entsprechend der Anzahl der Kleintransformatoren eine größere Anzahl von Stufen bereitgestellt werden, so dass eine Anpassung des Spannungsbereichs mittels Spannungsexpander über einen größeren Bereich einerseits erfolgen kann, aber andererseits auch eine feinere Abstufung und damit Anpassung an die jeweiligen Verhältnisse ermöglicht ist. Hierbei können die Kleintransformatoren jeweils gleichartig ausgelegt sein, so dass sie jeweils die gleiche zusätzliche Spannung erzeugen. Es ist dann nur ein Typ von Kleintransformatoren und ggf. Schaltwerken erforderlich, was die Lagerhaltung und Herstellung vereinfacht. Damit diese wahlfrei geschaltet werden können, ist vorzugsweise für die Kleintransformatoren jeweils ein eigenes Schaltwerk vorgesehen. Mit besonderem Vorteil sind die Schaltwerke so ausgeführt, dass sie als Schaltelemente Leistungsschütze und/oder Thyristoren aufweisen. Damit kann eine robuste Schaltung erreicht werden, die zugleich auch schnell ist, vorzugsweise in einem Schaltzeitenbereich von höchstens 0,1 Sek. Es soll aber nicht ausgeschlossen sein, dass die Kleintransformatoren mit unterschiedlicher Größe ausgelegt sind, so dass sie verschieden große Spannungen erzeugen. Dann kann durch eine Kombination ein noch größerer Spannungsbereich überdeckt werden; bspw. bei der Anordnung von drei Kleintransformatoren im Sinne von 1:2:4 können acht verschiedene Spannungsstufen von 0-7 für den Spannungsexpander bereitgestellt werden.

Ein Kleintransformator gemäß der vorliegenden Erfindung zeichnet sich dadurch aus, dass er lediglich für eine Leistung dimensioniert ist, die bedeutend kleiner ist als die Nennleistung der Windenergieanlage. Dies ist aus den bereits dargelegten Gründen vollkommen ausreichend, damit der Spannungsexpander eine entsprechende Vergrößerung des Spannungsbereichs der Windenergieanlage erreichen kann. Hohe Kosten bzw. unnötige Bauraumanforderungen durch eine Überdimensionierung werden damit vermieden. Vorzugsweise weist der Kleintransformator eine Leistung auf, die höchstens ¼ der Nennleistung der Windenergieanlage beträgt. Mit einer solchen, erfindungsgemäß kleinen Auslegung des Kleintransformators wird nicht nur eine beträchtliche Kostenersparnis erreicht, sondern auch das Erfordernis an Bauraum bzw. Kühlung des Kleintransformators ist damit minimiert. Der erfindungsgemäße Spannungsexpander kommt damit mit einem Minimum an zusätzlichem Aufwand aus, und zwar sowohl hinsichtlich Kosten wie auch Bauraumanforderungen. Damit eignet sich der erfindungsgemäße Spannungsexpander insbesondere auch, und das ist im Hinblick auf die bereits zahlreich bestehenden Windparks von großer Bedeutung, zur Nachrüstung für vorhandene Windenergieanlagen bzw. Windparks. Bewährt hat sich bei der Erfindung eine Auslegung der Leistung des Kleintransformators abhängig von der durch den Spannungsexpander bereitzustellenden zusätzlichen Spannung. Vorzugsweise wird die Leistung des Kleintransformators proportional zur Zusatzspannung bemessen, wobei die Zusatzspannung bezogen ist auf die Nennspannung. So wird bspw. zum Erreichen einer Zusatzspannung in Höhe von einem Zehntel der Nennspannung zweckmäßigerweise die Leistung des Kleintransformators ausgelegt auf maximal ein Zehntel der Nennleistung der Windenergieanlage. Das bedeutet, dass für eine Windenergieanlage mit einer Nennleistung von 3 MW nur ein Transformator benötigt wird, der gerade mal auf eine Leistung von 0,3 MW ausgelegt ist.

Zweckmäßigerweise ist der Spannungsexpander so ausgebildet, dass er mit seinem Kleintransformator über Schaltschütze von der Anschlussleitung abtrennbar ist. Damit kann erreicht werden, dass dann, wenn der Spannungsexpander im Normalbetrieb bei Spannungen im Bereich um die Nennspannung nicht benötigt wird, der Spannungsexpander unwirksam ist und damit Verluste verringert werden, insbesondere Übertragungsverluste durch den Kleintransformator. Zwar sind diese Verluste bedingt durch die bereits erfindungsgemäß kleine Dimensionierung des Kleintransformators ohnehin nur gering, jedoch bedeutet auch ein Vermeiden dieser geringen Verluste eine Wirkungsgradsteigerung der Windenergieanlage.

Um bei der erfindungsgemäßen mehrstufigen Ansteuerung des Kleintransformators des Spannungsexpanders eine Situation zu vermeiden, bei welcher der Kleintransformator während des Umschaltens lastfrei wird, und sei es nur momentan, ist vorzugsweise eine gesonderte Laststufe vorgesehen. Sie sorgt dafür, dass auch beim Umschalten stets eine Last auf den Kleintransformator aufgeschaltet ist. Damit wird der Gefahr von unzulässig hohen Spannungsspitzen beim Umschalten entgegengewirkt.

Der Spannungsexpander ist zweckmäßigerweise so ausgeführt, dass der Kleintransformator mit dem Anlagentransformator kombiniert verbaut ist. Vorzugsweise ist dabei der Kleintransformator weiter als eine eigene (ggf. wechselbare) Komponente ausgeführt, deren elektrische Verbindung in den Anlagentransformator eingeschleift ist. Besonders bevorzugt ist eine solche Bauweise, bei der die von dem Kleintransformator gebildete Zusatzspannungsquelle hochspannungsseitig an den Anlagentransformator angeschlossen ist. Vorzugsweise geschieht dies auf Mittelspannungsebene, und zwar in der Weise, dass der Kleintransformator innerhalb einer Mittelspannungswicklung des Anlagentransformators angeschlossen ist. Alternativ kann auch vorgesehen sein, dass der Kleintransformator mittelspannungsseitig an einem Sternpunkt des Anlagentransformators angeschlossen ist. Beide Ausführungsformen bieten den Vorteil, dass der Kleintransformator kombiniert mit der Mittelspannungsseite ausgeführt ist. Dies spart nicht nur Bauraum, sondern bedeutet auch einen wirksamen Kurzschlussschutz des Kleintransformators ohne weitere bauliche Maßnahmen, da der Kurzschlussschutz bereits durch die Mittelspannungswicklung des Anlagentransformators bewirkt ist.

Eine bevorzugte Ausführung des Kleintransformators ist ein Streufeldtransformator, der eine Kurzschlussspannung uk von mindestens 0,10, vorzugsweise von mindestens 0,15 aufweist. Hierbei ist es von Vorteil, wenn die Primärwicklung des Kleintransformators über die Sekundärwicklung gewickelt ist. Besonders bewährt hat es sich, den Streufeldtransformator mit Scheibenspulen zu versehen, die vorzugsweise auf entfernten Schenkeln eines Trafokerns insbesondere des Anlagentransformators angeordnet sind, und/oder als Stege im Trafokern ausgebildet sind. Für den Kern werden vorzugsweise Magnetbleche mit harter Sättigungskennlinie verwendet. Ferner sind die Spulen zweckmäßigerweise so angeordnet, dass sie keinen Lufttransformator bilden. Eine unerwünschte magnetische Kopplung wird so vermieden.

Zweckmäßigerweise ist vorgesehen, dass das Schaltwerk des Spannungsexpanders abhängig von Spannung und/oder Blindleistung betätigt wird. Besonders bewährt hat es sich, wenn das Schaltwerk in Abhängigkeit von beiden Parametern betätigt wird. Vorzugsweise ist dazu ein Regler für die Spannung und/oder Blindleistung vorgesehen, der als Regelgröße die Spannung und/oder die Blindleistung in der Anschlussleitung erfasst. Mit Vorteil geschieht diese Erfassung auf einer windenergieanlagenfernen, also netzseitigen Seite bezogen auf den erfindungsgemäßen Spannungsexpander. Damit wird eine hohe Genauigkeit bei der Einstellung des erwünschten erweiterten Spannungsbereichs erreicht. Um unerwünschte Interaktionen zwischen dem Schaltwerk des erfindungsgemäßen Spannungsexpanders und vorhandenen Spannungsregeleinrichtungen, insbesondere der Windenergieanlage als solche oder eines Windparks zu vermeiden, ist zweckmäßigerweise vorgesehen, dass ein Schaltzustand des Schaltwerks des Spannungsexpanders angelegt ist an eine solche vorhandene Regelung, und zwar insbesondere an eine Störgrößenvorsteuerung. Damit wird erreicht, dass der Regler im Fall der Betätigung des Schaltwerks bereits voreingestellt ist auf ein dadurch verändertes Spannungsniveau, und dementsprechend nicht mehr auszugleichen braucht. Der Gefahr eines Gegeneinanderarbeitens des bereits vorhandenen Reglers gegen die Spannungsbereichserweiterung mittels des erfindungsgemäßen Spannungsexpanders wird damit entgegengewirkt.

Die Erfindung erstreckt sich ferner auf einen Windpark mit mehreren Windenergieanlagen, die an ein Parknetz angeschlossen sind, welches wiederum über eine Kopplungsleitung mit einem Übertragungsnetz verbunden ist, wobei ein zentraler Spannungsexpander vorgesehen ist, der erfindungsgemäß mittels einer Zusatzspannungsquelle und einem Schaltwerk wie vorstehend beschrieben an der Erweiterung des Spannungsbereichs des Windparks als Ganzes sorgt. Zweckmäßigerweise ist dazu ein Parkregler für die Spannung und/oder Blindleistung vorgesehen, der als Regelgröße Spannung bzw. Blindleistung in der Kopplungsleitung erfasst, und mittels des zentralen Spannungsexpanders ausgleicht. Vorzugsweise erfolgt diese Erfassung auf der parkfernen Seite des Spannungsexpanders, also auf der Seite zum Übertragungsnetz hin. Zur näheren Beschreibung und zur Ausgestaltung von vorteilhaften Weiterbildungen wird auf vorstehende Beschreibung verwiesen, die sinngemäß gilt.

Vorzugsweise wird ein Schaltzustand des Schaltwerks des zentralen Spannungsexpanders an eine Störgrößenvorsteuerung des Parkreglers angelegt. Damit wird ein ruhiges Schaltverhalten erreicht, so dass eine bereits vorhandene Spannungsregelung des Windparks harmonisch mit dem erfindungsgemäßen zentralen Spannungsexpander zusammenarbeitet.

Vorzugsweise weist der Windpark eine oder mehrere Windenergieanlagen auf, die wie vorstehend beschrieben über einen Spannungsexpander verfügen. Damit werden der Spannungsbereich und der Verstellbereich weiter optimiert.

Die Erfindung wird nachfolgend unter Bezugnahme auf die beigefügte Zeichnung näher erläutert, in der vorteilhafte Ausführungsbeispiele der Erfindung dargestellt sind. Es zeigen:
- Fig. 1:: ein Ausführungsbeispiel für eine Windenergieanlage gemäß der Erfindung;
- Fig. 2:: eine Schaltungsansicht zu der in Fig. 1 dargestellten Windenergieanlage mit einem Spannungsexpander;
- Fig. 3:: eine Detaildarstellung zu einem Schaltwerk des Spannungsexpanders;
- Fig. 4:: eine Schaltung nach einem zweiten Ausführungsbeispiel der Erfindung mit einem zweistufigen Spannungsexpander;
- Fig. 5:: ein Ausführungsbeispiel für einen Anlagentransformator mit einem Kleintransformator des Spannungsexpanders in kombiniertem Verbau;
- Fig. 6:: ein weiteres Ausführungsbeispiel für den Anlagentransformator mit einer anderen Anordnung des Kleintransformators auf Mittelspannungsniveau;
- Fig. 7:: ein weiteres Ausführungsbeispiel mit einer Anordnung des Kleintransformators auf einem Niederspannungsniveau des Anlagentransformators;
- Fig. 8:: ein weiteres Ausführungsbeispiel mit einer anderen Anordnung des Kleintransformators auf der Niederspannungsseite des Anlagentransformators;
- Fig. 9:: ein Schaubild betreffend die Regelungsstruktur in einem Windpark mit Windenergieanlagen gemäß der Erfindung;
- Fig. 10:: Einzelheiten zur Steuerung für eine Einrichtung gemäß Fig. 9;
- Fig. 11:: ein Kennliniendiagramm für den Betrieb der Windenergieanlage mit dem erfindungsgemäßen Spannungsmodulator; und
- Fig. 12:: eine Ausschnittsdarstellung zu einem Streufeldtransformator.

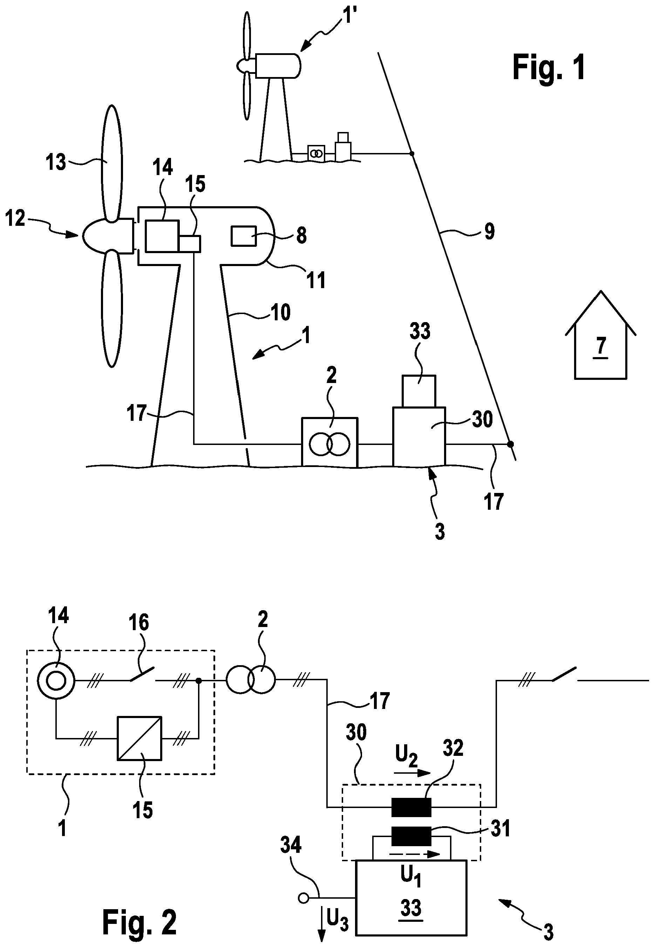

Die in Fig. 1 dargestellte und in ihrer Gesamtheit mit der Bezugsziffer 1 versehene Windenergieanlage umfasst eine auf einem Turm 10 in Azimutrichtung verschwenkbar angeordnete Gondel 11 an dem oberen Ende des Turms 10. Die Gondel 11 weist an einer ihrer Stirnseiten einen drehbar gelagerten Windrotor 12 mit Rotorblättern 13 auf. Dieser treibt über eine Welle (nicht dargestellt) einen Generator 14 mit einem Umrichter 15 zur Erzeugung elektrischer Energie an, die über eine Leitung 17 mit einem Anlagentransformator 2 der Windenergieanlage abgegeben wird an ein parkinternes Netz 9. Der Betrieb der Windenergieanlage 1 wird überwacht von einer Steuerung 8, welche in der Gondel 11 angeordnet ist. Sie ist über nicht dargestellte Kommunikationsleitungen mit einem Parkmaster 7 und/oder mit übergeordneten Leiteinrichtungen (nicht dargestellt), insbesondere dem Netzbetreiber, verbunden.

Die Windenergieanlage 1 gibt die elektrische Energie auf einem Niederspannungsniveau ab, welches typischerweise im Bereich von 600-1000 V liegt. Zur Übertragung, und das gilt auch bereits bei der Übertragung über das parkinterne Netz 9, werden jedoch regelmäßig höhere Spannungen benötigt, nämlich solche im Mittelspannungsbereich, bspw. 20 kV. Hierzu ist an oder in der Windenergieanlage 1 der Anlagentransformator 2 vorgesehen. Die Spannung im parkinternen Netz 9 kann schwanken, und die Windenergieanlage 1 hat der Spannungsschwankung entsprechend über ihren Transformator 2 zu folgen. Weiter ist von der Windenergieanlage auf Anforderung Blindleistung bereitzustellen, sei es als induktive oder kapazitive Blindleistung. Grundsätzlich können bekannte Windenergieanlagen 1 diese zwar bereitstellen, jedoch nicht immer über den gesamten geforderten Spannungsbereich. Um den für die Windenergieanlage 1 nutzbaren Spannungsbereich zu erweitern, ist erfindungsgemäß in die Anschlussleitung 17 der Windenergieanlage 1 an das Netz 9 ein Spannungsexpander 3 eingeschleift. In dem in Fig. 1 dargestellten Ausführungsbeispiel befindet er sich auf der Mittelspannungsseite des Transformators 2, also zwischen dem Transformator 2 und dem Netz 9. Er könnte jedoch genauso gut auch auf der Niederspannungsseite des Transformators 2 angeordnet sein, also zwischen Windenergieanlage 1 und Transformator 2. Der Spannungsbereich des Expanders 3 dient dazu, den Spannungsbereich der Windenergieanlage 1 am Netz 9 zu erweitern, um so auch verschärften Anforderungen der Netzbetreiber in Bezug auf Festigkeit der Windenergieanlagen gegenüber Spannungsschwankungen bei gleichzeitiger Bereitstellung von Blindleistung zu genügen.

Der Spannungsexpander 3 umfasst einen Kleintransformator 30 mit einer Primärwicklung 31 sowie eine Sekundärwicklung 32 und ein Schaltwerk 33. Die Sekundärwicklung 32 ist in die Anschlussleitung 17 zwischen Windenergieanlage 1 und Netz 9 eingeschleift, und zwar in dem in den Figuren 1 und 2 dargestellten Ausführungsbeispiel - wie bereits vorstehend erwähnt - auf der Netzseite, also auf Mittelspannungsniveau. Die Primärwicklung 31 ist an das Schaltwerk 33 angeschlossen, und wird von diesem mit elektrischer Energie versorgt, welches dem Schaltwerk 33 über einen Anschluss 34 zugeführt wird. Die Versorgung des Anschlusses 34 wiederum kann vom Netz 9, von der Windenergieanlage 1 selbst oder auch von einer beliebigen anderen Quelle erfolgen, wobei diese Quelle dann erfindungsgemäss bezüglich ihrer Frequenz- und Phasenlage zur im Netz vorliegenden Spannung angepasst sein muss.

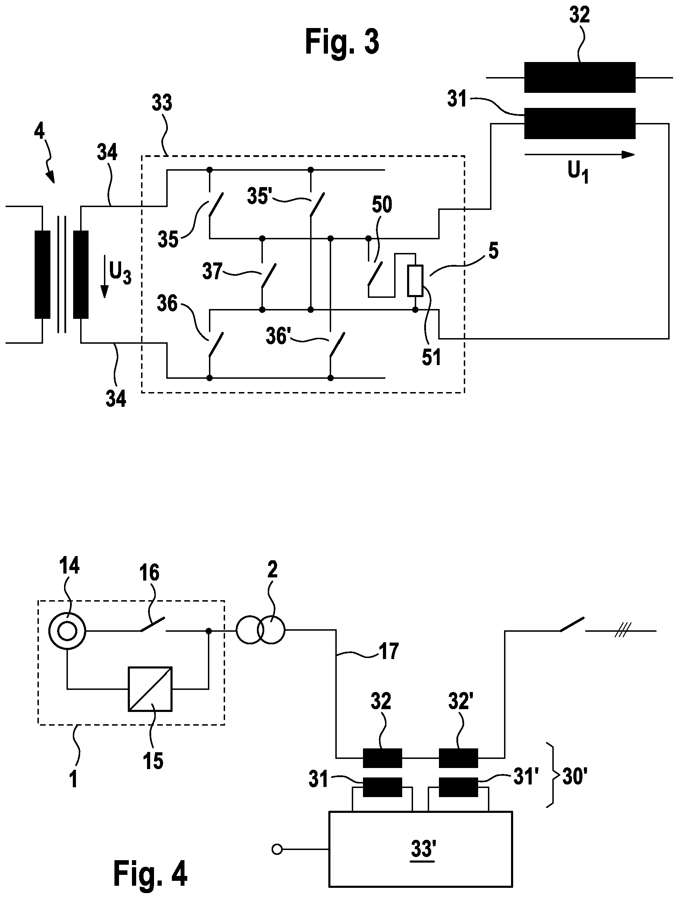

Der Aufbau und die Funktionsweise des Schaltwerks wird näher erläutert anhand des in Fig. 3 dargestellten Ausführungsbeispiels. Es zeigt ein dreistufig schaltendes Schaltwerk 33, mit den Schaltstufen MINUS, NULL und PLUS. In der Schaltstufe PLUS wird von dem Spannungsexpander 3 eine zusätzliche Spannung für den Kleintransformator 3 aufgeschaltet, so dass sich die Gesamtspannung der Windenergieanlage 1 erhöht. Umgekehrt wird in der Stellung MINUS die von der Windenergieanlage 1 abgegebene Spannung um einen entsprechenden Betrag verringert. In der Stellung NULL erfolgt keine Änderung. Der Betrag der von dem Kleintransformator 30 zusätzlich aufgebrachten Spannung U₂ ist bestimmt durch das Übersetzungsverhältnis zwischen Primärspule 31 und Sekundärspule 32. Die Primärspule 31 wird mit einer Spannung U₁ beaufschlagt von dem Schaltwerk 33, das wiederum seine elektrische Energie bezieht von einem an seinem Versorgungsanschluss 34 angeschlossenen Versorgungstransformator 4, der wiederum von der Windenergieanlage 1 selbst mit einer Spannung U₃ über die Versorgungsleitung 17 gespeist ist (die Speisung ist in Fig. 3 aus Übersichtlichkeitsgründen nicht dargestellt).

Zum Ansteuern der Primärwicklung 31 in den drei verschiedenen Stufen MINUS, NULL und PLUS sind Schalterpaare 35, 36 sowie 35', 36' und 37 vorgesehen. Für die Schaltstufe PLUS schaltet das Schalterpaar 35, 36 durch, während das Schalterpaar 35', 36' sowie der Schalter 37 geöffnet sind. In diesem Fall wird die an dem Versorgungsanschluss 34 angelegte Spannung U₃ polaritätsgleich von dem Schaltwerk 33 ausgegeben an die Primärwicklung 31. Abhängig von dem Übersetzungsverhältnis zwischen Primärwicklung 31 und Sekundärwicklung 32 speist der Kleintransformator 30 entsprechend eine Zusatzspannung U₂ in die Anschlussleitung 17 ein. In der Stufe für MINUS ist das Schalterpaar 35', 36' geschlossen, während das Schalterpaar 35, 36 sowie der Schalter 37 geöffnet sind. In diesem Fall wird die an dem Versorgungsanschluss 34 unverändert anliegende Versorgungsspannung U₃ mit umgekehrter Polarität (-U₁) an die Primärwicklung 31 ausgegeben. Dementsprechend speist der Kleintransformator an seiner Sekundärwicklung 32 eine Spannung -U₂ in die Anschlussleitung 17 ein. In der Stellung NULL ist der Schalter 37 geschlossen, während die Schalterpaare 35, 36 sowie 35', 36' geöffnet sind. Die Primärwicklung 31 ist damit über den Schalter 37 kurz geschlossen. Das bedeutet, dass das Schaltwerk 33 keine Spannung an die Primärwicklung 31 anlegt. Dementsprechend speist auch der Kleintransformator 30 keine Spannung in die Versorgungsleitung 17 zusätzlich ein. Damit wird abhängig von der Stellung der Schalter im Schaltwerk 33 und dem Kleintransformator 30 entweder eine positive Spannung +U₂, eine negative Spannung -U₂ oder gar keine Spannung (U=0) von dem Kleintransformator 30 zusätzlich in die Verbindungsleitung 17 der Windenergieanlage eingespeist. Entsprechend kann je nach Schalterstellung der Spannungsbereich erhöht, erniedrigt oder konstant gelassen werden.

Um sicherzustellen, dass auch beim Umschalten der Stufen die Primärwicklung 31 stets mit einer Last versehen ist, wird eine Laststufe 5 betätigt. Die Laststufe 5 umfasst einen Betätigungsschalter 50 sowie einen Lastwiderstand 51. Beim Umschalten der Stufen wird, bevor die Schalterpaare 35, 36 bzw. 35', 36' oder der Schalter 37 betätigt werden, der Betätigungsschalter 50 geschlossen und somit der Widerstand 51 als Last auf die Primärwicklung 31 geschaltet. Die Schalterpaare 35, 36 sowie 35', 36' oder der Schalter 37 können dann betätigt werden, ohne dass die Primärwicklung 31 lastfrei wird bzw. deren Stromkreis unterbrochen wird. Nachdem der neue Schaltzustand des Schaltwerks 33 erreicht ist, wird der Betätigungsschalter 50 wieder geöffnet und damit der Lastwiderstand 51 abgekoppelt.

In Fig. 4 ist ein weiteres Ausführungsbeispiel dargestellt, welches sich von dem in Fig. 3 dargestellten im Wesentlichen dadurch unterscheidet, dass ein Kleintransformator 30' mit einem zweiten Paar Primär- und Sekundärspulen 31', 32' vorgesehen ist. Das Schaltwerk 33' ist ebenfalls entsprechend modifiziert. Damit kann die von dem Spannungsexpander 3 zugefügte Zusatzspannung in fünf Stufen variiert werden. Dies ermöglicht eine größere bzw. feinere Verstellung.

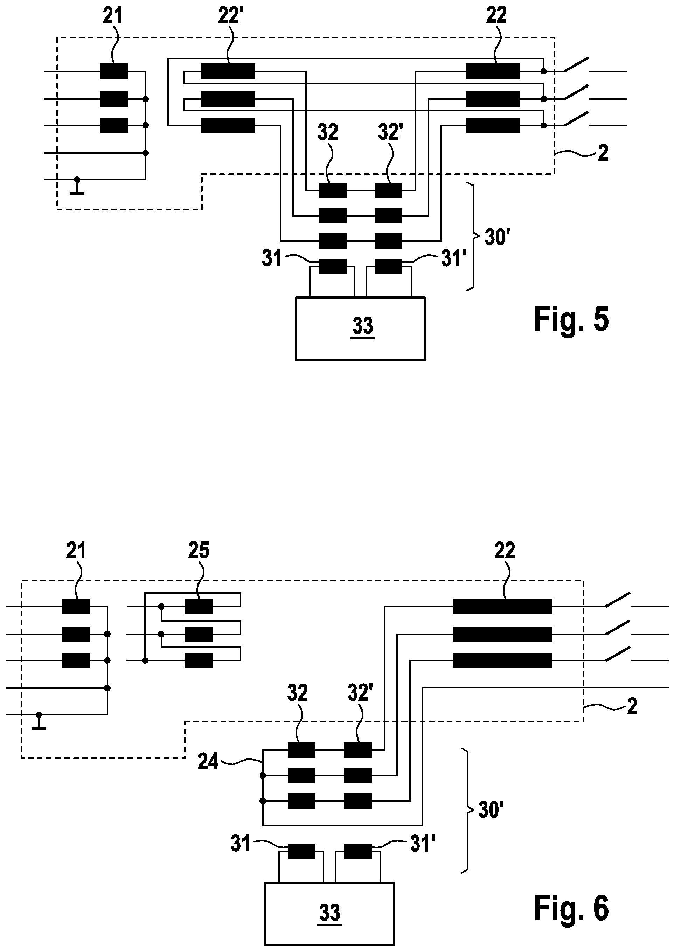

Bei den bisher dargestellten Ausführungsbeispielen ist der Kleintransformator 30, 30' des Spannungsexpanders als ein gesondertes Element ausgeführt. Dies ist jedoch nicht erforderlich. Es kann zweckmäßig sein, den Kleintransformator in den Anlagentransformator 2 der Windenergieanlage 1 zu integrieren. Ein erstes Ausführungsbeispiel hierfür ist in Fig. 5 anhand eines dreiphasigen Diagramms dargestellt. Der Transformator 2 weist die Schaltgruppe Dyn5 auf. In der linken Bildhälfte sind die Primärwicklungen 21 angeordnet, an welche die Windenergieanlage 1 angeschlossen ist. In der Mitte bzw. im rechten Bereich sind die Sekundärwicklungen angeordnet, wobei die Sekundärwicklungen zweiteilig ausgeführt sind mit den beiden Teilen 22, 22'. In dem Bereich zwischen den beiden Teilen 22, 22' der Sekundärwicklungen sind in jedem Phasenstrang zwei Sekundärspulen 32, 32' des Kleintransformators 30' des Spannungsexpanders angeordnet. Damit ergibt sich nicht nur eine kompaktere Bauform, sondern zugleich wird auch eine höhere Eigensicherheit des Kleintransformators erreicht. Denn Kurzschlussströme bei äußeren Fehlern werden durch die beidseitig vorhandenen Impedanzen der Sekundärwicklungen 22, 22' begrenzt.

Ein weiteres alternatives Ausführungsbeispiel ist in Fig. 6 dargestellt anhand eines Transformators der Schaltgruppe YNd7yn0. Auf der linksseitig dargestellten Niedervoltseite weist der Transformator für jeden Phasenstrang eine Primärwicklung 21 auf. Auf der rechts in der Mitte dargestellten Mittelspannungsseite weist der Transformator ebenfalls für jeden Phasenstrang eine Sekundärwicklung 22 auf, die über einen Sternpunkt 24 zusammengeführt sind. Zwischen den Sekundärspulen 22 und dem Sternpunkt 24 sind in jedem Phasenstrang zwei Sekundärspulen 32, 32' des Kleintransformators 30' angeordnet. Ferner weist der Transformator eine Ausgleichswicklung 25 auf. Ebenso wie bei dem in Fig. 5 dargestellten Ausführungsbeispiel ist bei diesem Ausführungsbeispiel eine Integration der Sekundärspulen 22, 22' des Kleintransformators 30' in den Anlagentransformator 2 erreicht. Ebenso ergibt sich ein Kurzschlussschutz für den Kleintransformator dank der Impedanzen des Anlagentransformators 2.

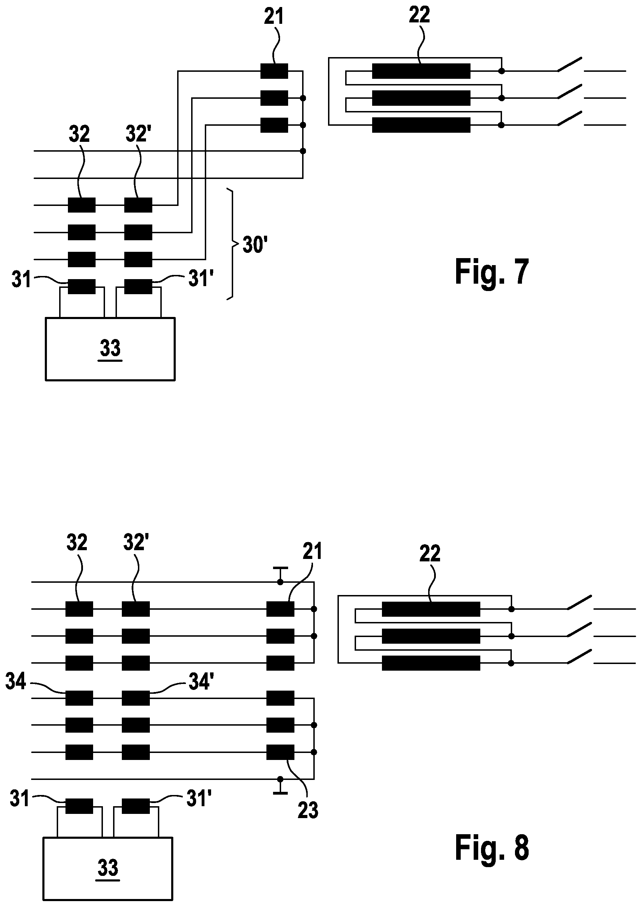

In Fig. 7 ist ein alternatives Schaltungskonzept dargestellt, am Beispiel wiederum eines Transformators der Schaltgruppe Dyn5. Hierbei ist der Kleintransformator 30' auf der (in der Figur linksseitig dargestellten) Niederspannungsseite angeschlossen. Der Transformator weist auf der Niederspannungsseite Primärwicklungen 21 und mittelspannungsseitig Sekundärwicklungen 22 auf. Zwischen den Primärwicklungen 21 und der sie speisenden Windenergieanlage 1 sind in jedem Phasenstrang zwei Sekundärwicklungen 32, 32' des Kleintransformators 30' angeordnet. Dieses Ausführungsbeispiel mit einem Zweiwicklungstransformator mit einer Primärwicklung und einer Sekundärwicklung für jede Phase kann erweitert werden zu einem Dreiwicklungstransformator mit zwei Primärwicklungen und einer Sekundärwicklung für jede Phase. Ein derartiges Ausführungsbeispiel mit einem Transformator der Schaltgruppe Dyn5yn5 ist in Fig. 8 dargestellt. Hierbei sind zwei Sätze von Primärwicklungen 21, 23 vorgesehen, die auf unterschiedlichen Spannungsniveaus von bspw. 660 V und 950 V liegen. Dies ermöglicht es, den einen Großteil der Leistung übertragenen Stator des Generators 14 der Windenergieanlage 1 mit einem höheren Spannungsniveau zu betreiben als den nur einen kleineren Teil der Leistung übertragenen Rotor des Generators 14. Da sowohl für die Primärwicklung 21 wie auch für die zusätzliche Primärwicklung 23 jeweils ein eigener Satz von Sekundärspulen 32, 32' und 34, 34' des Kleintransformators 30' vorgesehen sind, kann somit auch bei dieser Ausführungsform die erfindungsgemäße Erweiterung des Spannungsbereichs erreicht werden.

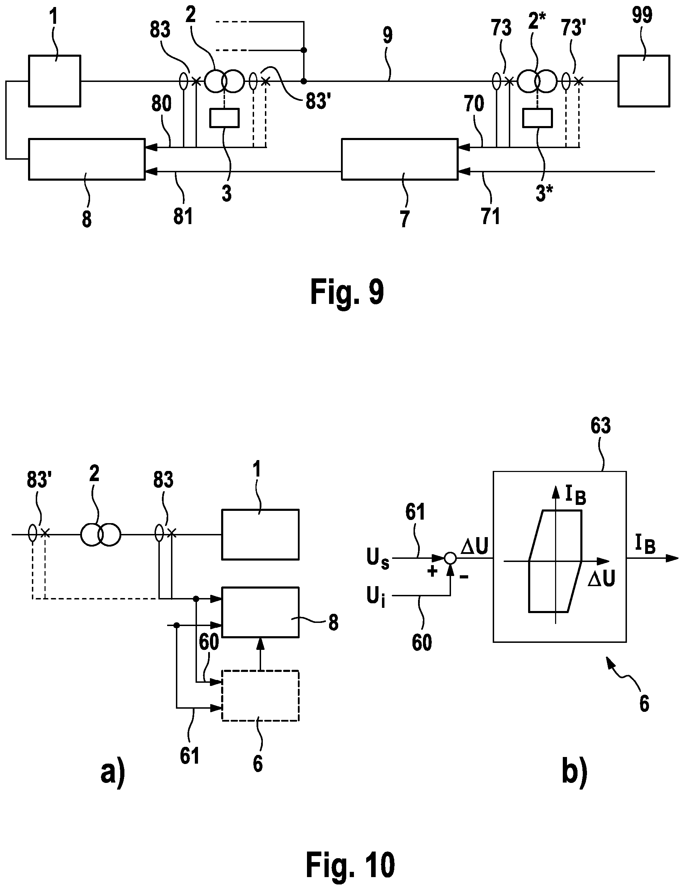

Das Zusammenwirken von Spannungsexpander 3 einerseits und einer Spannungsregelung in einem Windpark mit mehreren Windenergieanlagen 1 andererseits ist in Fig. 9 dargestellt. In der Abbildung links ist die Windenergieanlage 1 dargestellt, welche über ihren Anlagentransformator 2 mit daran angeordnetem Spannungsexpander 3 elektrische Leistung abgibt in ein parkinternes Netz 9, an welches weitere Windenergieanlagen (in Fig. 9 nicht dargestellt) angeschlossen sind. Das parkinterne Netz 9 ist ferner angeschlossen an einen Hochspannungstransformator 2* zur Abgabe elektrischer Leistung an ein Weitverkehrsübertragungsnetz 99. Für den Hochspannungstransformator 2* ist ebenfalls ein Spannungsexpander 3* vorgesehen.

Für jede der Windenergieanlagen kann eine Spannungsregelung vorgesehen sein, die Bestandteil der Steuerung 8 der Windenergieanlage ist. Sie weist einen Eingang 80 für Istwerte der Spannung und einen Eingang 81 für entsprechende Sollwerte auf. Die Istwerte werden erfasst mittels Sensoren 83 für Spannung und Strom. Sie sind in dem dargestellten Ausführungsbeispiel auf der Niederspannungsseite des Anlagentransformators 2 angeordnet. Alternativ kann aber auch vorgesehen sein, dass sie auf der Mittelspannungsseite des Anlagentransformators 2 angeordnet sind als Sensoren 83'.

Ferner weist der Windpark in seinem Parkmaster 7 eine Spannungsregelung für den gesamten Windpark auf. Sie hat ebenfalls zwei Eingänge, einen Eingang 70 für Istwerte sowie einen Eingang 71 für Sollwerte. Die Istwerte für Spannung und Strom im Windpark werden mittels Sensoren für Spannung und Strom 73 erfasst, die an der Mittelspannungsseite des Hochspannungstransformators 2* angeordnet sind. Alternativ kann auch vorgesehen sein, dass stattdessen Sensoren 73' auf der Hochspannungsseite des Hochspannungstransformators 2* angeordnet sind.

Bei Schwankungen der Spannung im Übertragungsnetz 99 bzw. im parkinternen Netz 9 kommt es zu entsprechenden Schwankungen auf der jeweils anderen Seite der Transformatoren 2, 2*. Da sowohl an dem Anlagentransformator 2 ein Spannungsexpander 3 wie auch an dem Hochspannungstransformator 2* ein weiterer, zentraler Spannungsexpander 3* angeordnet ist, ändert sich zusätzlich die Spannung auf der jeweiligen Primärseite der Transformatoren 2, 2* auch dann, wenn der mit dem Anlagentransformator 2 verbundene Spannungsexpander 3 bzw. der mit dem Parktransformator 2* verbundene zentrale Spannungsexpander 3* betätigt werden. Denn dann wird die von ihnen zusätzlich aufgebrachte Spannung stufig verändert. Das führt bei den auf der Primärseite angeordneten Sensoren 73, 83 zu sprunghaften Änderungen. Von der Spannungsregelung 7, 8 würden diese Änderungen erkannt und es würde versucht, sie auszuregeln. Dies ist aber nicht erwünscht, da ja das Zuschalten der Spannung mittels der Spannungsexpander 3, 3* erfolgte, um den Spannungsbereich aufzuweiten. Dem soll nicht durch eine entsprechende Gegenmaßnahme der integrierten Spannungsregelung 7 der Windenergieanlage bzw. des Windparks entgegengewirkt werden.

Um dies zu vermeiden, ist zweckmäßigerweise eine Vorsteuerung realisiert, und zwar in Gestalt einer Störgrößenaufschaltungseinheit 6. An die Störgrößenaufschaltungseinheit 6 sind wie auch an die Spannungsregelung 8 Signale für die Istwerte wie auch für die Sollwerte an entsprechende Eingänge 60 ,61 angelegt. Daraus wird mittels der Störgrößenaufschaltungseinheit 6 ein Korrekturwert bestimmt, welcher an einen Eingang zur Störgrößenaufschaltung 86 des Reglers 8 angelegt ist. Die Störgrößenaufschaltungseinheit 6 weist vorzugsweise ein Differenzglied 62 auf, welches eine Spannungsabweichung zwischen der Istspannung am Eingang 60 und der Sollspannung am Eingang 61 ermittelt. Der sich daraus ergebende Differenzspannungswert ΔU wird angelegt an ein Kennlinienglied 63, welches in Abhängigkeit von einem vorgesehenen Arbeitsbereich 18 der Windenergieanlage je nach Spannungsabweichung ein Wert für einen einzustellenden Blindstrom bestimmt. Dieser Wert wird von dem Kennlinienmodul 63 ausgegeben und an den Eingang zur Störgrößenaufschaltung 86 des Spannungsreglers 8 der Windenergieanlage 1 angelegt. Eine entsprechende Schaltung kann für den Spannungsregler 7 des Parkmasters vorgesehen sein.

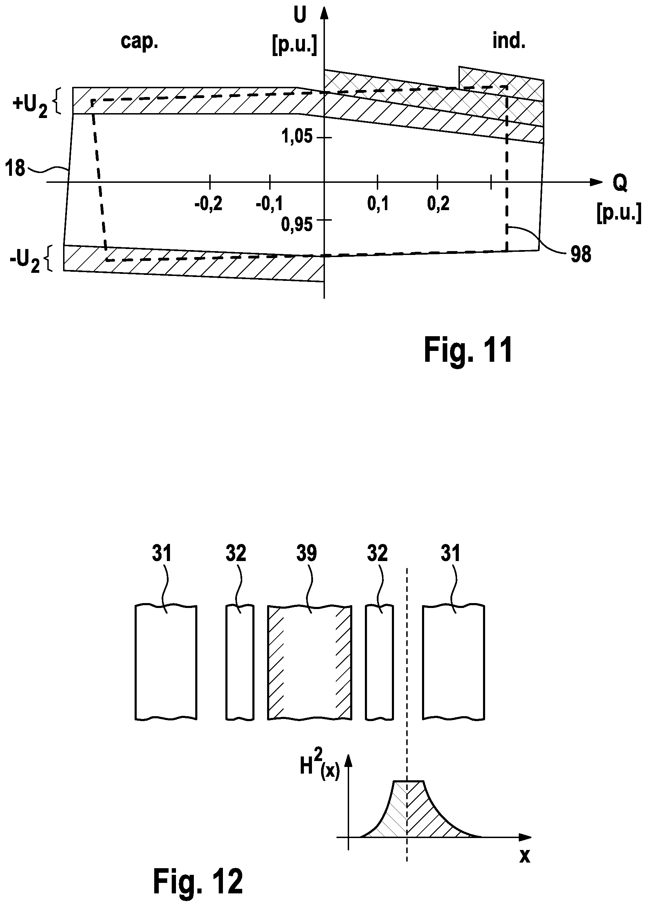

Die Wirkung des erfindungsgemäßen Spannungsexpanders ist in Fig. 11 dargestellt. Es zeigt ein Beispiel für ein von einem Netzbetreiber definiertes Anforderungsspektrum, nämlich zur Abgabe welcher kapazitiven oder induktiven Blindleistung in welchem Spannungsbereich die Windenergieanlage befähigt sein muss (dargestellt durch eine dicke gestrichelte Linie 98). Auf der Abszisse abgetragen ist die Blindleistung, und auf der Ordinate abgetragen ist der bei der jeweiligen Blindleistung geforderte Spannungsbereich. Im Vergleich zu dieser Anforderung des Netzbetreibers ist (mit einer durchgezogenen Linie) ein Arbeitsbereich 18 der Windenergieanlage 1 gemäß dem Ausführungsbeispiel der Erfindung dargestellt. Man erkennt, dass der von der durchgezogenen Linie umrandete Arbeitsbereich 18 den durch die gestrichelte Linie 98 definierten Anforderungsbereich nicht vollständig abdeckt. Das bedeutet, dass die Windenergieanlage 1 in ihrer Ausgangsform nicht ausreichend ist, um die Anforderungen zu erfüllen, wie sie durch den gestrichelten Bereich 98 aufgestellt sind. So kann der Unterspannungsbereich in dem linken unteren Quadranten nicht ausreichend eingehalten werden, und ferner ist der Überspannungsbereich sowohl bei kapazitiver wie auch bei induktiver Blindleistung nicht ausreichend abgedeckt.

Wird die Windenergieanlage 1 bspw. in dem linken unteren Quadranten betrieben, also bei Unterspannung und der Anforderung von kapazitiver Blindleistung, so wird der Spannungsexpander 3 zugeschaltet mit der Stufenschaltung MINUS. Damit verringert sich die Spannung der Windenergieanlage um die von dem Spannungsexpander aufgebrachte (für diesen Fall negative) Spannung U₂, wodurch sich die untere Spannungsgrenze um den schraffierten Bereich nach unten verschiebt. Man erkennt, dass die Windenergieanlage 1 damit den geforderten Unterspannungsbereich einhalten kann.

Im Überspannungsbereich gilt für den kapazitiven Bereich entsprechendes (s. linken oberen Quadranten). Auch hier kann die Windenergieanlage 1 bei Anforderung von kapazitiver Blindleistung die geforderte Überspannung nicht erbringen (die gestrichelte Linie gemäß den Anforderungen 98 liegt über dem nativen Arbeitsbereich 18 der Windenergieanlage 1). Erfindungsgemäß wird bei Bedarf in diesem Quadranten der Spannungsexpander 3 mittels des Schaltwerks 33 in Stellung PLUS geschaltet, so dass die Zusatzspannung U₂ (in diesem Fall positiv) hinzuaddiert wird. Der Spannungsbereich verschiebt sich damit entsprechend nach oben, wie durch den schraffierten Bereich in dem linken oberen Quadranten visualisiert ist.

Entsprechend wird in dem rechten oberen Quadranten verfahren. Man erkennt jedoch, dass das Hinzuschalten einer Stufe, wie es durch den schräg schraffierten Bereich dargestellt ist, nicht ausreicht, um die durch die dicke gestrichelte Linie 98 dargestellten Anforderungen zu erfüllen. Hier kommt die erfindungsgemäße Mehrstufigkeit in dem Sinne ins Spiel, dass zusätzliche Stufen freigeschaltet werden. Die Zusatzspannung erhöht sich dabei entsprechend, so dass durch Zuschalten von zwei bzw. bei größerem Bedarf von induktiver Blindleistung sogar durch das Hinzuschalten von drei Stufen der Spannungsbereich der Windenergieanlage so weit nach oben erweitert wird (s. den kreuz-schraffierten Bereich), dass die Anforderungen schließlich erfüllt sind.

In Fig. 12 ist eine Ausschnittsdarstellung eines Streufeldtransformators als eine mögliche Ausführungsform des Kleintransformators 30 dargestellt. Der Streufeldtransformator umfasst einen aus Magnetblechen mit harter Sättigungskennlinie zusammengesetzten Kern 39, auf den zuerst eine Sekundärwicklung 32 gewickelt ist, und auf diese wiederum ist dann eine Primärwicklung 31 aufgewickelt. Der sich dabei ergebende Magnetisierungsverlauf und die in dem magnetischen Feld gespeicherte Energie zwischen Sekundärspule 32 und Primärspule 31 sind schematisch in dem Diagramm in der unteren Hälfte der Figur dargestellt. Damit wird eine Strombegrenzung im Kurzschlussfall bewirkt, und zwar insbesondere im Hinblick auf das Schaltwerk. Es versteht sich, dass die auch mit anderen Bauformen erreicht werden kann.

## Patentansprüche

1. Windenergieanlage mit einem Windrotor (12), einem damit angetriebenen Generator (14) zur Erzeugung elektrischer Energie und einer Anschlussleitung zur Abgabe der elektrischen Energie an ein Netz(9) ggf. über einen Anlagentransformator (2), wobei ein Spannungsexpander (3) vorgesehen ist, der mittels einer Zusatzspannungsquelle den Spannungsbereich der Windenergieanlage erweitert,
**dadurch gekennzeichnet, dass**
der Spannungsexpander (3) einen eigenen Kleintransformator (30) mit einer Primär- und einer Sekundärwicklung (31, 32) und ein Schaltwerk (33) umfasst, und wobei der Kleintransformator (30) einen Bruchteil der Nennleistung der Windenergieanlage aufweist und mit der Sekundärwicklung (32) in der Anschlussleitung (17) eingeschleift ist, und das Schaltwerk (33) mit der Primärwicklung (31) des Kleintransformators (30) verbunden ist und diese umschaltbar mehrstufig ansteuert, wobei das Schaltwerk (33) umfasst mehrere Schalter 35, 36, 35', 36', 37), die jeweils einer Stufe zugeordnet sind, wobei dem Schaltwerk (33) über einen Anschluss (34) eine bezüglich ihrer Frequenz- und Phasenlage zu dem Netz (9) angepasste Spannung zugeführt wird.

2. Windenergieanlage nach Anspruch 1, **dadurch gekennzeichnet, dass** die mehrstufige Ansteuerung der Primärwicklung (31) des Kleintransformators (30) durch das Schaltwerk (33) mit unterschiedlicher Polarisation erfolgt, wobei vorzugsweise das Schaltwerk (33) eine Laststufe (5) aufweist, die beim Umschalten zugeschaltet ist, so dass stets der Kleintransformator (30) mit einer Last verbunden ist.

3. Windenergieanlage nach Anspruch 1 oder 2, **dadurch gekennzeichnet, dass** mehrere Kleintransformatoren (30,30') in Reihe an der Anschlussleitung (17) angeordnet sind, wobei vorzugsweise für jeden ein eigenes Schaltwerk (33) vorgesehen ist.

4. Windenergieanlage nach einem der vorangehenden Ansprüche, **dadurch gekennzeichnet, dass** der Kleintransformator (30) eine Leistung hat, die höchstens ¼ der Nennleistung der Windenergieanlage (1) beträgt.

5. Windenergieanlage nach Anspruch 4, **dadurch gekennzeichnet, dass** die Leistung des Kleintransformators (30) so bemessen ist, dass sie proportional zur Zusatzspannung ist, vorzugsweise maximal ein Zehntel der Nennleistung der Windenergieanlage bei einer Zusatzspannung in Höhe von einem Zehntel der Nennspannung.

6. Windenergieanlage nach einem der vorangehenden Ansprüche, **dadurch gekennzeichnet, dass** der Spannungsexpander (3) über Schaltschütze von der Anschlussleitung (17) abtrennbar ist.

7. Windenergieanlage nach einem der vorangehenden Ansprüche, **dadurch gekennzeichnet, dass** der Spannungsexpander (3) hochspannungsseitig an einen Anlagentransformator (2) angeschlossen ist, und zwar vorzugsweise auf Mittelspannungsebene.

8. Windenergieanlage nach Anspruch 7, **dadurch gekennzeichnet, dass** der Kleintransformator (30) innerhalb einer Mittelspannungswicklung (22) des Anlagentransformators (2) angeschlossen ist oder mittelspannungsseitig in einem Sternpunkt des Anlagentransformators (2) angeschlossen ist.

9. Windenergieanlage nach einem der vorangehenden Ansprüche, **dadurch gekennzeichnet, dass** der Kleintransformator (30) als ein Streufeldtransformator ausgeführt ist, der eine Kurzschlussspannung uk von mindestens 0,10, vorzugsweise mindestens 0,15 auf-weist.

10. Windenergieanlage nach Anspruch 9, **dadurch gekennzeichnet, dass** der Streufeldtransformator Magnetbleche mit harter Sättigungskennlinie aufweist, wobei vorzugsweise die Primärwicklung (31) des Kleintransformators (30) über dessen Sekundarwicklung (32) gewickelt ist.

11. Windenergieanlage nach einem der Ansprüche 9 bis 10, **dadurch gekennzeichnet, dass** der Streufeldtransformator mit Scheibenspulen versehen ist, die vorzugsweise auf entfernten Schenkeln eines Trafokerns angeordnet sind, und/oder als Stege im Trafokern ausgebildet sind.

12. Windenergieanlage nach einem der vorangehenden Ansprüche, **dadurch gekennzeichnet, dass** das Schaltwerk (33) abhängig von Spannung und/oder Blindleistung betätigt wird, wobei vorzugsweise ein Regler (8) für die Spannung und/oder Blindleistung vorgesehen ist, der als Regelgröße Spannung und/oder Blindleistung in der Anschlussleitung erfasst, vorzugsweise auf der windenergieanlagenfernen Seite des Spannungsexpanders (3).

13. Windenergieanlage nach Anspruch 12, **dadurch gekennzeichnet, dass** der Spannungsexpander (3) mit einer Störgrößenvorsteuerung (6) für den Regler (8) zusammenwirkt.

14. Windpark mit mehreren Windenergieanlagen (1, 1') vorzugsweise nach einem der Ansprüche 1 bis 13, die an ein Parknetz (9) angeschlossen sind, das über eine Kopplungsleitung (18) mit einem Übertragungsnetz (99) verbunden ist, wobei ein zentraler Spannungsexpander (3*) vorgesehen ist, der mittels einer Zusatzspannungsquelle den Spannungsbereich des Windparks erweitert, **dadurch gekennzeichnet, dass** die Zusatzspannungsquelle einen Kleintransformator (30') mit einer Primärwicklung (31') und einer Sekundärwicklung (32') und ein Schaltwerk (33') umfasst, und wobei der Kleintransformator (30') einen Bruchteil der Nennleistung der mehreren Windenergieanlagen aufweist und mit der Sekundärwicklung (32') in die Kopplungsleitung (18) eingeschleift ist, und das Schaltwerk (33) mit der Primärwicklung (31') des Kleintransformators (30') verbunden ist und diese umschaltbar mehrstufig ansteuert, wobei das Schaltwerk (33) umfasst mehrere Schalter 35, 36, 35', 36', 37), die jeweils einer Stufe zugeordnet sind, wobei dem Schaltwerk (33') über einen Anschluss (34) eine bezüglich ihrer Frequenz- und Phasenlage zu dem Parknetz (9) angepasste Spannung zugeführt wird.

15. Windpark nach Anspruch 14, **dadurch gekennzeichnet, dass** ein Parkregler (7) für die Spannung und/oder Blindleistung vorgesehen ist, der als Regelgröße Spannung und/oder Blindleistung in der Kopplungsleitung (18) erfasst, vorzugsweise auf der parkfernenSeite des Spannungsexpanders (3*), wobei weiter vorzugsweise der Spannungsexpander (3*) mit einer Störgrößenvorsteuerung für einen Parkregler (7) zusammenwirkt).

## Claims

1. Wind turbine comprising a wind rotor (12), a generator (14) driven thereby for generating electrical energy and a connecting line for outputting the electrical energy to a grid (9), possibly via a turbine transformer (2), wherein a voltage expander (3) is provided, which expands the voltage range of the wind turbine by means of an additional voltage source, **characterized in that**
the voltage expander (3) comprises a dedicated small transformer (30) having a primary and a secondary winding (31, 32) and a switching mechanism (33) and wherein the small transformer (30) has a fraction of the rated power of the wind turbine and is looped in with the secondary winding (32) in the connecting line (17), and the switching mechanism (33) is connected to the primary winding (31) of the small transformer (30) and actuates said primary winding with the capacity for switchover in multi-tap fashion, wherein the switching mechanism (33) comprises a plurality of switches (35, 36, 35', 36', 37) which are each associated with a tap, wherein a voltage which is matched with respect to its frequency and phase angle to the grid (9) is supplied to the switching mechanism (33) via a connection (34).

2. Wind turbine according to Claim 1, **characterized in that** the multi-tap actuation of the primary winding (31) of the small transformer (30) by means of the switching mechanism (33) takes place with different polarization, wherein the switching mechanism (33) preferably has a load tap (5), which is connected during switchover so that the small transformer (30) is always connected to a load.

3. Wind turbine according to Claim 1 or 2, **characterized in that** a plurality of small transformers (30, 30') are arranged in series on the connecting line (17), wherein preferably a dedicated switching mechanism (33) is provided for each of said small transformers.

4. Wind turbine according to one of the preceding claims, **characterized in that** the small transformer (30) has a power which is at most ¼ of the rated power of the wind turbine (1).

5. Wind turbine according to Claim 4, **characterized in that** the power of the small transformer (30) is dimensioned such that it is proportional to the additional voltage, preferably at most a tenth of the rated power of the wind turbine in the case of an additional voltage of the order of a tenth of the rated voltage.

6. Wind turbine according to one of the preceding claims, **characterized in that** the voltage expander (3) is disconnectable from the connecting line (17) via switching contactors.

7. Wind turbine according to one of the preceding claims, **characterized in that** the voltage expander (3) is connected on the high-voltage side to a turbine transformer (2), to be precise preferably at the medium-voltage level.

8. Wind turbine according to Claim 7, **characterized in that** the small transformer (30) is connected within a medium-voltage winding (22) of the turbine transformer (2) or is connected on the medium-voltage side at a neutral point of the turbine transformer (2).

9. Wind turbine according to one of the preceding claims, **characterized in that** the small transformer (30) is in the form of a high-leakage-reactance transformer, which has a short-circuit voltage uk of at least 0.10, preferably at least 0.15.

10. Wind turbine according to Claim 9, **characterized in that** the high-leakage-reactance transformer has magnetic steel sheets with a hard saturation characteristic, wherein preferably the primary winding (31) of the small transformer (30) is wound over the secondary winding (32) thereof.

11. Wind turbine according to either of Claims 9 and 10, **characterized in that** the high-leakage-reactance transformer is provided with pancake coils, which are preferably arranged on remote limbs of a transformer core, and/or are in the form of webs in the transformer core.

12. Wind turbine according to one of the preceding claims, **characterized in that** the switching mechanism (33) is actuated depending on the voltage and/or wattless power, wherein preferably a regulator (8) is provided for the voltage and/or wattless power, which regulator detects, as controlled variable, the voltage and/or wattless power in the connecting line, preferably on the side of the voltage expander (3) which is remote from the wind turbine.

13. Wind turbine according to Claim 12, **characterized in that** the voltage expander (3) interacts with disturbance variable feedforward control (6) for the regulator (8).

14. Wind farm comprising a plurality of wind turbines (1, 1'), preferably according to one of Claims 1 to 13, which are connected to a farm grid (9), which is connected to a transmission grid (99) via a coupling line (18), wherein a central voltage expander (3*) is provided, which expands the voltage range of the wind farm by means of an additional voltage source, **characterized in that** the additional voltage source comprises a small transformer (30') having a primary winding (31') and a secondary winding (32') and a switching mechanism (33'), and wherein the small transformer (30') has a fraction of the rated power of the plurality of wind turbines and is looped in with the secondary winding (32') into the coupling line (18), and the switching mechanism (33) is connected to the primary winding (31') of the small transformer (30') and actuates said primary winding with the capacity for switchover in multi-tap fashion, wherein the switching mechanism (33) comprises a plurality of switches (35, 36, 35', 36', 37) which are each associated with a tap, wherein a voltage which is matched with respect to its frequency and phase angle to the farm grid (9) is supplied to the switching mechanism (33') via a connection (34).

15. Wind farm according to Claim 14, **characterized in that** a farm regulator (7) for the voltage and/or wattless power is provided, which detects, as controlled variable, the voltage and/or wattless power in the coupling line (18), preferably on the side of the voltage expander (3*) which is remote from the farm, wherein more preferably the voltage expander (3*) interacts with disturbance variable feedforward control for a farm regulator (7).

## Revendications

1. Éolienne composée d'un rotor éolien (12), d'un générateur (14) entraîné par ce dernier et destiné à produire de l'énergie électrique, et d'une ligne de raccordement servant à la distribution de l'énergie électrique au réseau (9), éventuellement par l'intermédiaire d'un transformateur d'installation (2), dans laquelle il est prévu un élargisseur de plage de tensions (3) qui élargit la plage de tensions de l'éolienne au moyen d'une source de tension supplémentaire,
**caractérisée en ce que** l'élargisseur de plage de tensions (3) comprend petit transformateur (30) qui lui est propre, composé d'un enroulement primaire et d'un enroulement secondaire (31, 32), et un mécanisme de commutation (33), et dans laquelle le petit transformateur (30) présente une fraction de la puissance nominale de l'éolienne et est inséré dans la ligne de raccordement (17) avec l'enroulement secondaire (32), et le mécanisme de commutation (33) est relié à l'enroulement primaire (31) du petit transformateur (30) et commande celui-ci de manière à permettre une commutation à plusieurs étages, dans laquelle le mécanisme de commutation (33) comprend une pluralité de commutateurs (35, 36, 35', 36', 37) qui sont respectivement associés à un étage, dans laquelle une tension adaptée au réseau (9) en ce qui concerne sa fréquence et sa position de phase est appliquée au mécanisme de commutation (33) par l'intermédiaire d'une borne (34).

2. Éolienne selon la revendication 1, **caractérisée en ce que** la commande à plusieurs étages de l'enroulement primaire (31) du petit transformateur (30) est effectuée par le mécanisme de commutation (33) avec une polarisation différente, dans laquelle le mécanisme de commutation (33) présente de préférence un étage de charge (5) qui est activé lors de la commutation, de manière à ce que le petit transformateur (30) soit toujours relié à une charge.

3. Éolienne selon la revendication 1 ou 2, **caractérisée en ce qu'**une pluralité de petits transformateurs (30, 30') sont disposés en série sur la ligne de raccordement (17), dans laquelle il est de préférence prévu un mécanisme de commutation (33) propre à chacun d'entre eux.

4. Éolienne selon l'une des revendications précédentes, **caractérisée en ce que** le petit transformateur (30) présente une puissance qui est au plus égale à ¼ de la puissance nominale de l'éolienne (1) .

5. Éolienne selon la revendication 4, **caractérisée en ce que** la puissance du petit transformateur (30) est dimensionnée de manière à ce qu'elle soit proportionnelle à la tension supplémentaire, de préférence au plus à un dixième de la puissance nominale de l'éolienne pour une tension supplémentaire s'élevant à un dixième de la tension nominale.

6. Éolienne selon l'une des revendications précédentes, **caractérisée en ce que** l'élargisseur de plage de tensions (3) peut être déconnecté de la ligne de raccordement (17) par l'intermédiaire de contacteurs de commutation.

7. Éolienne selon l'une des revendications précédentes, **caractérisée en ce que** l'élargisseur de plage de tensions (3) est raccordé du côté à haute tension à un transformateur d'installation (2), de préférence à un niveau à moyenne tension.

8. Éolienne selon la revendication 7, **caractérisée en ce que** le petit transformateur (30) est raccordé à l'intérieur d'un enroulement de moyenne tension (22) du transformateur d'installation (2) ou est raccordé du côté à moyenne tension en un point d'étoile du transformateur d'installation (2).

9. Éolienne selon l'une des revendications précédentes, **caractérisée en ce que** le petit transformateur (30) est réalisé sous la forme d'un transformateur de champ parasite qui présente une tension de court-circuit uk d'au moins 0,10, de préférence d'au moins 0,15.

10. Éolienne selon la revendication 9, **caractérisée en ce que** le transformateur de champ parasite comporte des feuilles magnétiques présentant une caractéristique de saturation dure, dans laquelle l'enroulement primaire (31) du petit transformateur (30) est de préférence enroulé sur son enroulement secondaire (32) .

11. Éolienne selon l'une des revendications 9 à 10, **caractérisée en ce que** le transformateur de champ parasite est muni de bobines à disque qui sont de préférence disposées sur des branches éloignées d'un noyau de transformateur et/ou qui sont réalisées sous la forme de barres dans le noyau de transformateur.

12. Éolienne selon l'une des revendications précédentes, **caractérisée en ce que** le mécanisme de commutation (33) est actionné en fonction de la tension et/ou de la puissance réactive, dans laquelle il est de préférence prévu un régulateur (8) destiné à la tension et/ou à la puissance réactive, qui détecte la tension et/ou la puissance réactive sur la ligne de raccordement en tant que grandeur de régulation, de préférence du côté du régulateur de tension (3) qui est distant du système d'éolienne.

13. Éolienne selon la revendication 12, **caractérisée en ce que** l'élargisseur de plage de tensions (3) coopère avec une commande prédictive à grandeur perturbatrice (6) destinée au régulateur (8).

14. Parc éolien comprenant plusieurs éoliennes (1, 1'), de préférence selon l'une des revendications 1 à 13, qui sont raccordées à un réseau de parc (9), lui-même relié par l'intermédiaire d'une ligne de couplage (18) à un réseau de distribution (99), dans lequel il est prévu un élargisseur de plage de tensions central (3*) qui élargit la plage de tensions du parc éolien au moyen d'une source de tension supplémentaire,
**caractérisé en ce que** la source de tension supplémentaire comprend un petit transformateur (30') composé d'un enroulement primaire (31') et d'un enroulement secondaire (32'), et un mécanisme de commutation (33'), et dans lequel le petit transformateur (30') présente une fraction de la puissance nominale de la pluralité d'éoliennes et est inséré dans la ligne de couplage (18) avec l'enroulement secondaire (32'), et le mécanisme de commutation (33) est relié à l'enroulement primaire (31') du petit transformateur (30') et commande celui-ci de manière à permettre une commutation à plusieurs étages, dans lequel le mécanisme de commutation (33) comprend une pluralité de commutateurs (35, 36, 35', 36', 37) qui sont respectivement associés à un étage, dans lequel une tension adaptée au réseau de parc (9) en ce qui concerne sa fréquence et sa position de phase est appliquée au mécanisme de commutation (33') par l'intermédiaire d'une borne (34).

15. Parc éolien selon la revendication 14, **caractérisé en ce qu'**il est prévu un régulateur de parc (7) destiné à la tension et/ou à la puissance réactive, qui détecte la tension et/ou la puissance réactive sur la ligne de couplage (18) en tant que grandeur de régulation, de préférence du côté du régulateur de tension (3*) qui est distant du parc, dans lequel l'élargisseur de tension (3*) coopère en outre de préférence avec une commande prédictive à grandeur perturbatrice destinée à un régulateur de parc (7).
